Europäisches Patentamt

European Patent Office

Office européen des brevets

(11) Veröffentlichungsnummer: **0 471 115 A1**

## EUROPÄISCHE PATENTANMELDUNG

(21) Anmeldenummer: **90250207.9**

(22) Anmeldetag: **16.08.90**

(51) Int. Cl.5: **B21B 21/00**, B21B 35/12

(43) Veröffentlichungstag der Anmeldung:
**19.02.92 Patentblatt 92/08**

(84) Benannte Vertragsstaaten:
**FR GB IT SE**

(71) Anmelder: **MANNESMANN Aktiengesellschaft**
**Mannesmannufer 2**
**W-4000 Düsseldorf 1(DE)**

(72) Erfinder: **Niggemann, Theodor**
**Gartenstrasse 72**
**W-4500 Osnabrück(DE)**

(74) Vertreter: **Meissner, Peter E., Dipl.-Ing. et al**
**Patentanwaltsbüro Meissner & Meissner,**
**Herbertstrasse 22**
**W-1000 Berlin 33(DE)**

(54) **Verfahren und Vorrichtung zur Herstellung von strangförmigem metallischen Gut.**

(57) Zur Herstellung von strangförmigem metallischen Gut, insbesondere von metallischen Rohren definierter Länge, wird das Gut durch zwei achsparallel gelagerte und zwischen sich den Walzenspalt bildende, durch Antrieb von außen gemeinsam hin- und herbewegte und gleichzeitig eine Drehbewegung mit wechselnder Drehrichtung ausführende Formwalzen bei schrittweisem Vorschub des Halbzeugs gegen die Formwalzen ausgewalzt. Die Drehbewegung der Formwalzen erfolgt durch Zahnräder (6, 11), die während der Hin- und Herbewegung unmittelbar oder über Zwischenzahnräder (14) auf Zahnstangen (9, 13) abrollen. Dabei erhält für den Walzvorgang jede der Formwalzen für sich einen zusätzlichen Vorschub in die jeweilige Drehrichtung.

EP 0 471 115 A1

Die vorliegende Erfindung betrifft ein Verfahren zur Herstellung von strangförmigem metallischen Gut, insbesondere von metallischen Rohren definierter Länge, bei dem das Gut durch zwei achsparallel gelagerte und zwischen sich den Walzspalt bildende, durch Antrieb von außen gemeinsam hin- und herbewegte und gleichzeitig eine Drehbewegung mit wechselnder Drehrichtung ausführende Formwalzen bei schrittweisem Vorschub des Halbzeugs gegen die Formwalzen ausgewalzt wird, wobei die Drehbewegung der Formwalzen durch Zahnräder bewirkt wird, die während der Hin- und Herbewegung auf Zahnstangen abrollen.

Solche Verfahren haben seit langem Eingang in die Fertigungstechnik gefunden, bekannt geworden sind sie in Zusammenhang mit der Herstellung von Rohren als sogenannte Pilgerwalzverfahren. Insbesondere bei diesen Produkten, bei denen es auf bestimmte Wanddickentoleranzen, hohe Oberflächengüte außen wie innen, sowie je nach Einsatzbereich auf bestimmte Gefügestruktur und physikalische Eigenschaften ankommt, sind alle diese Forderungen dann erfüllbar, wenn der letzte Arbeitsschritt im Herstellungsprozeß eine Kaltverformung ist. Hierfür bietet sich das gattungsgemäße Walzverfahren an, bei dem auf dem Walzgut, zum Beispiel einer Rohrluppe, Formwalzen abrollen, die an ihrer Arbeitsfläche eine sich kurvenförmig in Walzrichtung verjüngende Aussparung aufweisen. Gleichzeitig mit ihrer rollenden Bewegung führen die Formwalzen, in einem sogenannten Walzgerüst gelagert, gemeinsam eine quer zu ihren Achsen gerichtete Hin- und Herbewegung aus, wobei die eine die Walzrichtung ist und nach Umkehr der Bewegungsrichtung die Formwalzen in ihre Ausgangslage zurückgeführt und gleichzeitig rückgedreht werden.

Während dieser Phase der Rückführung der Formwalzen erfolgt der Vorschub des Walzgutes und gleichzeitig eine Drehung dieses Halbzeugs um bestimmte Winkelbeträge dann, wenn Rohre gepilgert werden, um deren kreisförmigen Querschnitt sicherzustellen.

Der während des Betriebsablaufs sich ständig wiederholende und kurzfristig unter hoher Last ablaufende Wechsel der Bewegungsrichtungen führt jedoch zu hohem Verschleiß der Antriebsaggregate, insbesondere der miteinander in Eingriff stehenden Zahnräder und Zahnstangen. Ein Austausch der verschlissenen Teile ist abgesehen von den Materialkosten mit längeren Ausfallzeiten beim Umrüsten verbunden. Darüber hinaus können durch die starken mechanischen Belastungen schon frühzeitig zunächst noch wenig auffällige Schäden an den Zähnen der Antriebsräder entstehen, die im Laufe der Zeit erhebliche Folgeschäden an den Lagern der Maschinenanlage nachsichziehen und sich damit auf die Qualität des Endprodukts nachteilig auswirken.

Der Erfindung liegt deshalb die Aufgabe zugrunde, eine Möglichkeit zu finden, die durch stoßartig angreifende Last in den Antriebsaggregaten bedingten Verschleißerscheinungen zu vermeiden beziehungsweise in ihrem Ausmaß so zu reduzieren, daß Stillstandzeiten erheblich vermindert sowie die Qualität des Endprodukts nicht nachteilig beeinflußt wird.

Gelöst wird diese Aufgabe gemäß der Erfindung dadurch, daß für den Walzvorgang jede der Formwalzen für sich einen zusätzlichen Vorschub in die jeweilige Drehrichtung erfährt. Der Erfindung liegt dabei die Erkenntnis zugrunde, daß es im wesentlichen das Spiel in der Zahnstangen / Zahnrad - Kraftübertragung ist, das bei jedem Walzhub durchlaufen werden muß und dabei zu einer erheblichen Stoßbeanspruchung führt. Die an den ineinandergreifenden Zähnen wirksam werdenden Stoßvorgänge regen darüberhinaus impulsartig lokale Eigenfrequenzen im Kontaktbereich der Zähne an, die in Verbindung mit den bei solchen Anlagen bekannten geringen Dämpfungen zu unerwarteten hohen dynamischen Beanspruchungen im gesamten System führen können.

Wird nun nach der Erfindung verfahren, das heißt erhält jede der Formwalzen für sich einen Vorschub um ihre Achse in Umfangsrichtung, dann bedeutet dies in der Zahnstangen / Zahnrad - Kraftübertragung eine Beseitigung des Spiels und damit einen sicheren Flankenschluß der stoßbelasteten Zähne.

Dieser Flankenschluß oder -kontakt der kraftübertragenden Zähne ist bei jedem Betriebszustand gewährleistet, Druckspitzen durch Laststöße sowie als Folge hiervon bedingte Schwingungen innerhalb des Walzsystems werden auf einfache Weise abgebaut, eine gleichmäßige Lastverteilung auf die Getriebe beider Walzwerksseiten ist die Folge, abgesehen von der verbesserten Qualität des Endprodukts.

Der zur Beseitigung des Zahnspiels erfindungsgemäß erfolgende Vorschub der Formwalzen kann beliebig durchgeführt werden. Als besonders vorteilhaft hat es sich jedoch erwiesen, wenn der zusätzliche Vorschub selbsttätig durch eine mechanische Vorspannung des die Drehbewegung jeder Formwalze bewirkenden Zahnrad-/Zahnstangensystems erfolgt. Damit wird gerade der für Stöße besonders anfällige Kraftübertragungsbereich erfaßt und die Gefahr von hier aus sich über das gesamte Walzsystem erstreckender Schwingungen unterbunden.

Die Vorspannung des Zahnrad-/Zahnstangensystems ist in Durchführung der Erfindung einstellbar. Damit ist eine Anpassung an die jeweils verwendeten Elemente der Antriebsaggregate möglich, das gilt insbesondere auch für die Elemente, zum Beispiel Zahnräder, die ausgetauscht worden sind. Die Vorspannung kann auch regelbar sein, diesem Zweck können allgemein bekannte Regelglieder, zum Beispiel elektrischer oder hydraulischer Art dienen.

Zur Durchführung des Verfahrens nach der Erfindung wird vorteilhaft eine Vorrichtung verwendet, bei der die Formwalzen in einem hin- und herbewegbaren Walzgerüst achsparallel gelagert sind und an ihrem einen Achsenende starr mit der jeweiligen Formwalze verbunden, Zahnräder aufweisen, die mit ihren Zähnen in entsprechende Lücken von Zahnstangen eingreifen. Jeder der einer Formwalze zugeordneten Zahnstange ist nun in Weiterführung der Erfindung mindestens eine weitere Zahnstange zugeordnet, die gegenüber der ersten in Längsrichtung verschiebbar ist. Mit dieser Verschiebung in Längsrichtung mindestens einer weiteren Zahnstange wird die Formwalze, die mit der ihr zugeordneten Zahnstange in Eingriff steht, bis zum Flankenkontakt beziehungsweise Flankenschluß der beiderseitigen Zähne vorgedreht. Das Zahnspiel wird also von vornherein eliminiert, durch den während des Betriebs auch bleibenden Flankenkontakt treten auch bei Umkehr der Drehrichtung impulsartige Schläge an den Zahnflanken nicht auf, die bisher häufig schon nach kurzer Betriebszeit sogar zu einem Ausschlagen der Zähne führen konnten.

Zweckmäßig ist es ferner, wenn nach einem weiteren Erfindungsgedanken zur Verschiebung mindestens einer weiteren Zahnstange in Längsrichtung eine an jeweils einem Ende der weiteren Zahnstangen angeordnete Zustellfeder dient. Die Vorspannung der Zustellfeder ist dabei vorteilhaft einstellbar.

Das nach der Erfindung aus mindestens zwei parallel geführten Zahnstangen bestehende Antriebssystem wird zweckmäßig zu einer Einheit zusammengefaßt. Hierzu ist vorgesehen, daß die jeder Formwalze zugeordnete Zahnstange zusammen mit mindestens einer weiteren Zahnstange in einem kassettenartigen Gehäuse gelagert ist. Diese Maßnahme erleichtert den Einbau des das Zahnspiel beseitigenden Systems sowie deren Wartung bei neuen Walzanlagen, sie erleichtert in dieser kompakten Form aber auch das Nachrüsten bereits im Betrieb befindlicher Walzanlagen.

Im Falle des kassettenartigen Gehäuses wird die jeder Formwalze zugeordnete Zahnstange in diesem Gehäuse raumfest angeordnet sein, und die eine selbsttätige Längsverschiebung der weiteren Zahnstange bewirkende Zustellfeder wird sich an der Innenwand des Gehäuses abstützen.

Bei bisherigen Pilgerwalzanlagen mit jeder Formwalze zugeordneter Zahnstange ist diese in irgendeiner Form an der Innenwand des Walzengehäuses angebracht. Die hierbei unmittelbar auf Gehäuseteile übertragenen Schwingungen sind mit die Ursache für hohe Betriebsgeräusche beim Pilgern von Rohren. Allein die örtliche Trennung von Walzengehäuse und kassettenartigem Gehäuse für die Zahnstangen führt im Zusammenhang mit der Beseitigung des Zahnspiels nach der Erfindung zu einer erheblichen Geräuschminderung.

Eine weitere Verbessung im Hinblick auf eine Schwingungsdämpfung läßt sich in Weiterführung des Erfindungsgedankens aber noch dadurch erreichen, daß das kassettenförmige Gehäuse federnd gelagert ist. Dieses nunmehr in sich spielfreie, zum Beispiel sich ohne kraftschlüssige Verbindung zum umgebenden Rahmen der Anlage gegenüber diesem federnd abstützende, also praktisch schwimmend gelagerte Übertragungssystem führt neben der bereits erwähnten hohen Verschleißsicherheit der stoßartig beanspruchten Antriebselemente zu einer wesentlichen Reduzierung des Geräuschpegels der gesamten Walzanlage.

Wie bereits ausgeführt, erhält die Formwalze einen zusätzlichen Vorschub in Drehrichtung dadurch, daß die unter Vorspannung stehende zweite Zahnstange die im Eingriff stehenden Zähne des auf der Achse der Formwalze fest angeordneten Zahnrads um das Zähnespiel verdreht. Damit dies problemlos möglich ist, weist das an der Achse der Formwalze befindliche Zahnrad eine Breite auf, die der Gesamtbreite aller zugehörigen Zahnstangen entspricht. Eine weitere vorteilhafte Möglichkeit ist die, daß dem an der Achse der Formwalze befindlichen Zahnrad mindestens ein zweites Zahnrad zugeordnet ist, dessen Zähne mit denen des ersten Zahnrads fluchten und das mit der Achse ebenfalls fest verbunden ist. Diese Anordnung gestattet auch ein getrenntes Auswechseln der mechanisch unterschiedlich belasteten Zahnräder, da nach wie vor der Hauptanteil der Kraftübertragung über die raumfest gelagerte Zahnstange erfolgt.

Bekanntlich führen die im hin- und herbewegten Walzgerüst sich gegenüber stehenden, achsparallel gelagerten Formwalzen gegenläufige Drehbewegungen aus. Um das während der Hin- und Herbewegung zu erreichen, erfolgt die Kraftübertragung von dem an der Achse der Formwalze befindlichen Zahnrad zur zugehörigen Zahnstange über ein Zwischenzahnrad. Da dieses Zwischenzahnrad gleichzeitig mit seinen Zähnen sowohl mit der Zahnstange als auch mit dem auf der Achse der Formwalze befestigten Zahnrad in Eingriff steht, ist die bei den bekannten Walzanlagen bisher unvermeidbare Stoßbelastung besonders kritisch. Auch hier schafft die Erfindung eine Lösung des Problems. Es ist nämlich vorgesehen, daß dem Zwischenzahnrad ein achsgleiches zweites Zahnrad zugeordnet ist, das gegenüber dem Zwischenzahnrad drehbar gelagert ist. Dabei reicht es aus, wenn, wie weiter vorgesehen, das zweite Zahnrad auf einer über der Achse des Zwischenzahnrads befindlichen Laufbuchse gelagert ist, gegenüber dem ersten Zahnrad also verdreht werden kann.

Diese erfindungsgemäße Änderung bisheriger Ausführungen macht es möglich, daß mittels der vorgespannten zweiten oder weiteren Zahnstange das zweite Zahnrad um das Flankenspiel erstes Zahnrad / Zwischenzahnrad beziehungsweise Zwischenzahnrad / raumfeste Zahnstange verdreht wird. Da das zweite Zahnrad auch nach Herstellung des Flankenkontakts zwischen den Zähnen des ersten Zahnrads und denen des Zwischenzahnrads sowie zwischen den Zähnen des Zwischenrahnrads und denen der feststehenden Zahnstange unter Vorspannung verbleibt, ist der spielfreie Kraftschluß zwischen erstem Zahnrad und Zwischenzahnrad sowie zwischen Zahnrad und Zahnstange während des Walzprozesses stets gewährleistet.

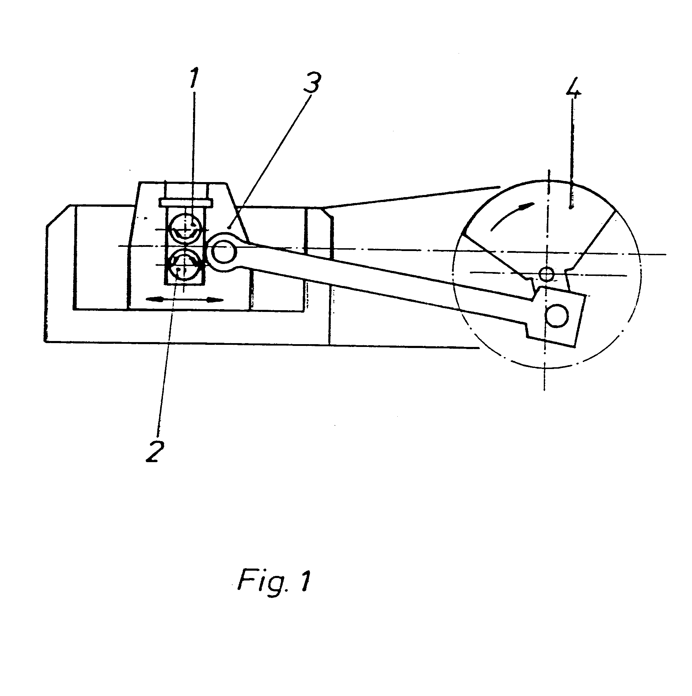

Anhand der in den Figuren 1 bis 6 dargestellten Ausführungsbeispiele wird die Erfindung im folgenden noch näher erläutert.

In Figur 1 ist das Prinzip eines sogenannten Pilgerwalzwerks dargestellt, bei dem aus einer sogenannten Rohrluppe (Halbzeug) das fertige Rohr durch schrittweises Auswalzen hergestellt wird. Zu diesem Zweck sind die den Walzspalt zwischen sich einschließenden Formwalzen 1 und 2 achsparallel in dem sogenannten Walzgerüst 3 gelagert, das in Pfeilrichtung durch den Kurbeltrieb 4 hin- und herbewegt wird. Gleichzeitig wird den Formwalzen 1 und 2, wie durch die Richtung der Pfeile angezeigt, eine oszillierende Bewegung aufgezwungen. Erreicht wird dies dadurch, daß auf den Achsen der Formwalzen Zahnräder angebracht sind, die in raumfest gelagerten Zahnstangen eingreifen. Die Formwalzen 1 und 2 rollen demnach während der Hin- und Herbewegung des Walzgerüsts 3 auf dem Walzgut ab.

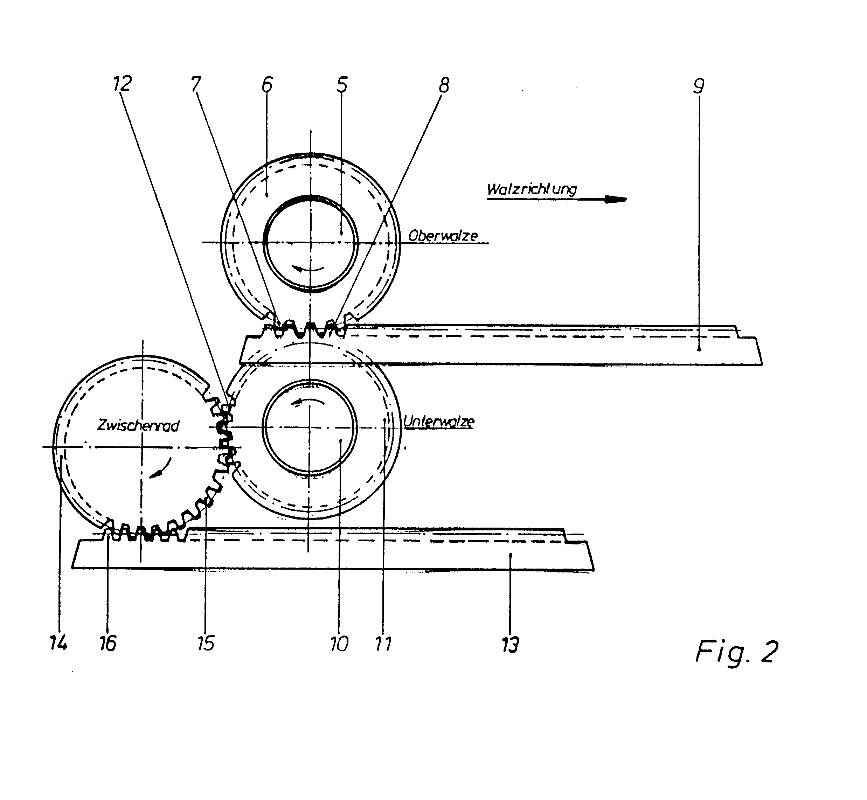

Die Figur 2 verdeutlicht diesen Vorgang. Auf der Achse 5 der nicht dargestellten Formwalze 1 ist das Zahnrad 6 angeordnet und kraftschlüssig mit der Achse 5 verbunden. Mit den Zähnen 7 greift das Zahnrad 6 in die Lücken zwischen den Zähnen 8 der raumfest gelagerten Zahnstange 9 ein. Wird nun das Walzgerüst zum Beispiel in Walzrichtung bewegt, erfährt das Zahnrad 6 und damit die mit diesem starr verbundene Formwalze 1, die auch als Oberwalze bezeichnet wird, eine Drehbewegung ebenfalls in Drehrichtung, und zwar solange, bis das Walzgerüst in die Ausgangslage zurückbewegt wird. Mit der Umkehr der Bewegungsrichtung des Walzgerüsts ändert sich auch die Drehrichtung des Zahnrads 6 und damit die der Formwalze 1.

Gleiches gilt für die auch als Unterwalze bezeichnete Formwalze 2, mit dem Unterschied, daß das auf ihrer Achse 10 befestigte Zahnrad 11 mit seinen Zähnen 12 nicht unmittelbar in die ebenfalls raumfest angeordnete Zahnstange 13 eingreift. Die Kraftübertragung erfolgt vielmehr wegen der Gegenläufigkeit der Formwalzen 1 und 2 über das Zwischenzahnrad 14, dessen Zähne 15 einerseits mit denen des Zahnrads 11 in Eingriff stehen, andererseits in die Lücken zwischen den Zähnen 16 der Zahnstange 13 eingreifen. Durch diesen doppelten Eingriff ist das Zwischenzahnrad 14 für stoßartige Belastungsvorgänge besonders anfällig, entsprechend hoch waren deshalb bisher auch die Verschleißerscheinungen an diesen Stellen.

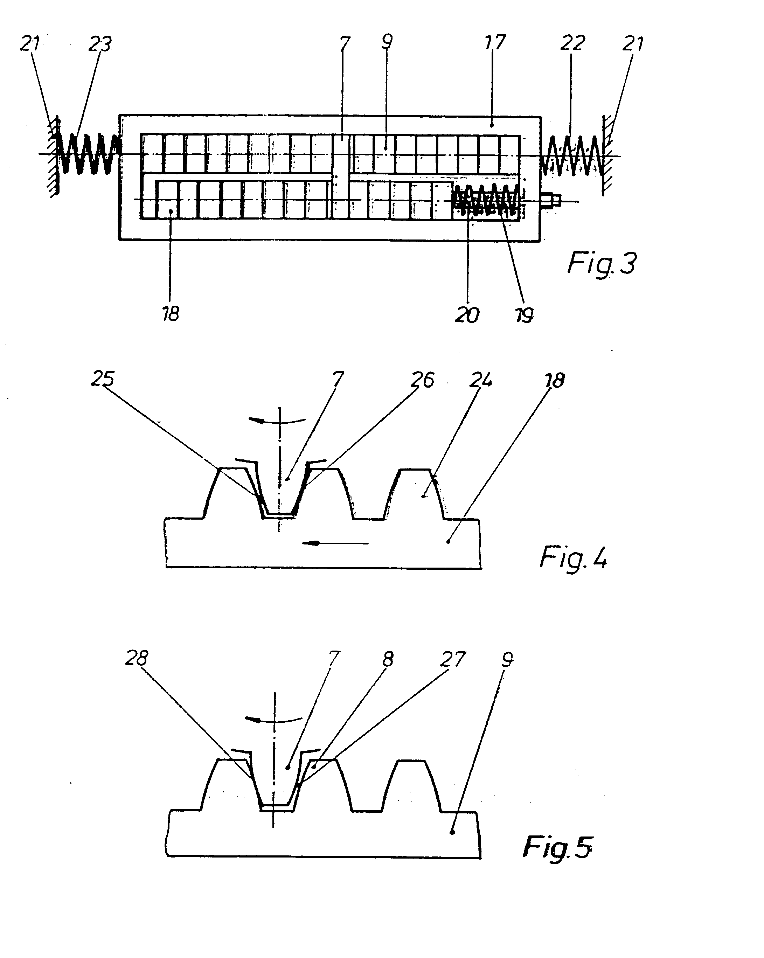

Zur Verringerung dieser Verschleißerscheinungen ist es besonders vorteilhaft, wenn die Zahnstangen 9 und 18 entsprechend der Figur 3 angeordnet sind. Als Beispiel der erfindungsgemäßen Maßnahme dient die Zahnstange 9, die als Antrieb für das Zahnrad 6 und damit für die Formwalze 1 (Oberwalze) wirkt, wenn das Walzgerüst bewegt wird. Die Zahnstange 9 ist in dem kassettenförmigen Gehäuse 17 raumfest gelagert, ihr zugeordnet ist eine zweite Zahnstange 18 mit gleicher Teilung, die gegenüber der Zahnstange 9 in Achsrichtung verschiebbar ist. Im dargestellten Ausführungsbeispiel erfolgt diese Längsverschiebung selbsttätig, hierzu dient die Zustellfeder 19, die auf dem von Hand oder durch einen Steuerantrieb in Achsrichtung bewegbaren Dorn 20 gelagert ist.

Zur Dämpfung von Maschinenschwingungen stützt sich das kassettenförmige Gehäuse 17 gegenüber dem Maschinenrahmen 21 über die Federpakete 22 und 23 ab.

Greifen nun die Zähne 7 des Zahnrads 6, dessen axiale Breite, wie dargestellt, der Gesamtbreite der beiden Zahnstangen 9 und 18 entspricht, in die Zahnlücken 25 der Zähne 24 der Zahnstange 18 ein, und geht man lediglich zum besseren Verständnis davon aus, daß zunächst einmal die Zähne beider Zahnstangen miteinander fluchten, dann wird durch die Zustellkraft der Feder 19, wie insbesondere aus der Figur 4 ersichtlich, ein druckbelasteter Flankenschluß 26 zwischen den Zähnen 7 des Zahnrads 6 und den Zähnen 24 der Zahnstange 18 hergestellt.

Das bedeutet für das Zahnrad 6 ein leichtes Vorschieben in Drehrichtung und zwar um den Weg 27 des Spiels zwischen den Zähnen 7 und den Zähnen 8 der eigentlichen Antriebs-Zahnstange 9 bis zum Flankenkontakt 28, wie es die Figur 5 deutlich macht.

Statt eines in der Breite beide Zahnstangen 9 und 18 überdeckenden Zahnrads 6 können auch zwei Einzelräder eingesetzt werden, deren Zähne miteinander fluchten und die beide starr auf der gemeinsamen Achse angeordnet sind. Wesentlich ist in allen Fällen, daß durch die von der Zustellfeder 19 ausgeübte Vorspannung die Antriebsaggregate spielfrei während des gesamten Walz- und Richtungswechselvorgangs zusammenwirken.

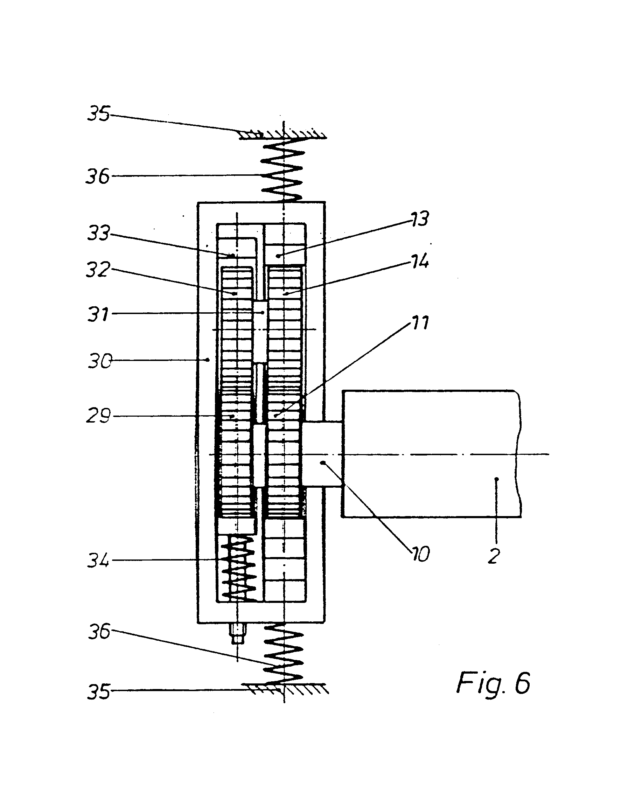

Die Figur 6 schließlich zeigt eine Draufsicht auf die Formwalze 2 (Unterwalze), auf deren Achse 10 das Zahnrad 11 und ein weiteres Zahnrad 29 fest montiert sind.

Die Zähne beider Zahnräder fluchten miteinander. Das Zwischenzahnrad ist entsprechend der Figur 2 mit 14 bezeichnet, es greift, wie dort bereits ausgeführt, mit seinen Zähnen in die Zahnstange 13 ein, die innerhalb des kassettenförmigen Gehäuses 30 raumfest gelagert ist.

Auf der Achse 31 des Zwischenzahnrads 14 ist aber noch das weitere Zahnrad 32 angeordnet, das gegenüber dem Zahnrad 14 verdrehbar ist. Dieses Zahnrad 32 greift nun mit seinen Zähnen in die Zahnstange 33 ein, die durch die sich am Gehäuse 30 abstützende Feder 34 vorgespannt wird. Das bedeutet im Sinne der an Hand der Figur 3 bis 5 beschriebenen Erfindung ein Vorschieben des Zahnrads 32 und damit gleichzeitig des mit diesem in Eingriff stehenden Zahnrads 29 sowie des mit diesem fluchtenden Zahnrads 11 jeweils in Drehrichtung um das zwischen den Zähnen des mechanisch hochbelasteten Zwischenzahnrads 14 und denen der Zahnstange 13 vorliegenden Zahnspiels. Damit ist auch im Bereich des Antriebs der Formwalze 2 während des Betriebs stets der Flankenkontakt der kraftübertragenden Zähne gewahrt.

Ebenso wie bei dem Ausführungsbeispiel nach der Figur 3 ist auch das kassettenförmige Gehäuse 30 nach der Figur 6 gegenüber der Gehäusewand 35 der Walzanlage durch die Federpakete 36 schwingungsdämpfend gelagert.

Statt der beiden Zahnräder 11 und 29 kann auch ein einziges Zahnrad mit einer Breite, die der Summe der Breite der beiden Einzelzahnräder entspricht, verwendet werden. Entscheidend für die nach der Erfindung getroffene Maßnahme ist ja ohnehin, daß die Zähne des Zahnrads 11 mit denen des weiteren Zahnrads 29 miteinander fluchten müssen.

**Patentansprüche**

1. Verfahren zur Herstellung von strangförmigem metallischen Gut, insbesondere von metallischen Rohren definierter Länge, bei dem das Gut durch zwei achsparallel gelagerte und zwischen sich den Walzspalt bildende, durch Antrieb von außen gemeinsam hin- und herbewegte und gleichzeitig eine Drehbewegung mit wechselnder Drehrichtung ausführende Formwalzen bei schrittweisem Vorschub des Halbzeugs gegen die Formwalzen ausgewalzt wird, wobei die Drehbewegung der Formwalzen durch Zahnräder bewirkt wird, die während der Hin- und Herbewegung auf Zahnstangen abrollen, **dadurch gekennzeichnet,** daß für den Walzvorgang jede der Formwalzen für sich einen zusätzlichen Vorschub in die jeweilige Drehrichtung erhält.

2. Verfahren nach Anspruch 1, **dadurch gekennzeichnet,** daß der zusätzliche Vorschub selbsttätig durch eine mechanische Vorspannung des die Drehbewegung jeder Formwalze bewirkenden Zahnrad-/ Zahnstangensystems erfolgt.

3. Verfahren nach Anspruch 1 oder 2, **dadurch gekennzeichnet,** daß die Vorspannung einstellbar ist.

4. Verfahren nach Anspruch 1 oder 2, **dadurch gekennzeichnet,** daß die Vorspannung regelbar ist.

5. Vorrichtung zur Durchführung des Verfahrens nach Anspruch 1 oder einem der folgenden, bei der die Formwalzen in einem hin- und herbewegbaren Walzgerüst achsparallel gelagert sind und an ihrem einen Achsende starr mit der jeweiligen Formwalze verbunden, Zahnräder aufweisen, die mit ihren Zähnen in entsprechende Lücken von Zahnstangen eingreifen, **dadurch gekennzeichnet,** daß jeder der einer Formwalze (1, 2) zugeordneten Zahnstange (9, 13) mindestens eine weitere Zahnstange (18, 33) zugeordnet ist, die gegenüber der ersten in Längsrichtung verschiebbar ist.

6. Vorrichtung nach Anspruch 5, **dadurch gekennzeichnet,** daß zur Verschiebung mindestens einer weiteren Zahnstange (18) in Längsrichtung eine an jeweils einem Ende der weiteren Zahnstangen angeordnete Zustellfeder (19) dient.

7. Vorrichtung nach Anspruch 6, **dadurch gekennzeichnet,** daß die Vorspannung der Zustellfeder (19) einstellbar ist.

8. Vorrichtung nach Anspruch 5 oder einem der folgenden, **dadurch gekennzeichnet,** daß die jeder Formwalze (1, 2) zugeordnete Zahnstange (9, 13) zusammen mit mindestens einer weiteren Zahnstange (18, 33) in einem kassettenartigen Gehäuse (17) gelagert ist.

9. Vorrichtung nach Anspruch 6 oder einem der folgenden, **dadurch gekennzeichnet,** daß die jeder Formwalze (1, 2) zugeordnete Zahnstange (9, 13) in dem kassettenartigen Gehäuse (17) gegenüber diesem raumfest angeordnet ist.

10. Vorrichtung nach Anspruch 6 oder einem der folgenden, **dadurch gekennzeichnet,** daß sich die Zustellfeder (19) an der Innenwand des kassettenartigen Gehäuses (17) abstützt.

11. Vorrichtung nach Anspruch 9 oder 10, **dadurch gekennzeichnet,** daß das kassettenartige Gehäuse (17) federnd gelagert ist.

12. Vorrichtung nach Anspruch 11, **dadurch gekennzeichnet,** daß das kassettenartige Gehäuse (17) ohne kraftschlüssige Verbindung zum umgebenden Rahmen (21) der Anlage sich gegenüber diesem federnd (22, 23) abstützt.

13. Vorrichtung nach Anspruch 6 oder einem der folgenden, **dadurch gekennzeichnet,** daß dem an der Achse (10) der Formwalze (2) befindlichen Zahnrad (11) mindestens ein zweites Zahnrad (29) zugeordnet ist, dessen Zähne mit denen des ersten Zahnrads fluchten und das mit der Achse ebenfalls fest verbunden ist.

14. Vorrichtung nach Anspruch 6 oder einem der folgenden, **dadurch gekennzeichnet,** daß das an der Achse der Formwalze (2) befindliche Zahnrad (11) eine Breite aufweist, die der Gesamtbreite aller zugehörigen Zahnstangen (13, 33) entspricht.

15. Vorrichtung nach Anspruch 6 oder einem der folgenden, bei der die Kraftübertragung von dem an der Achse der Formwalze befindlichen Zahnrad zur gehörigen Zahnstange über ein Zwischenzahnrad erfolgt, **dadurch gekennzeichnet,** daß dem Zwischenzahnrad (14) ein achsgleiches zweites Zahnrad (32) zugeordnet ist, das gegenüber dem Zwischenzahnrad (14) drehbar gelagert ist.

16. Vorrichtung nach Anspruch 15, **dadurch gekennzeichnet,** daß das zweite Zahnrad (32) auf einer über der Achse (31) des Zwischenzahnrads (14) befindlichen Laufbuchse gelagert ist.

*Fig. 1*

Walzrichtung

Oberwalze

Unterwalze

Zwischenrad

Fig. 2

Fig. 3

Fig. 4

Fig. 5

Fig. 6

# EUROPÄISCHER RECHERCHENBERICHT

Nummer der Anmeldung

**EP 90 25 0207**

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| E | DE-A-3 905 244 (KM-KABELMETAL) <br> * Insgesamt * <br> − − − | 1-16 | B 21 B 21/00 <br> B 21 B 35/12 |
| Y | DE-C-1 287 541 (MANNESMANN-MEER) <br> * Insgesamt * | 1,2,5,6,14 | |
| A | | 15 | |
| | − − − | | |
| Y | FR-A-2 525 785 (SNECMA) <br> * Insgesamt * | 1,2,5,6,14 | |
| A | | 8 | |
| | − − − | | |
| A | DE-A-2 245 721 (SAXAGANSKIJ et al.) <br> * Seiten 5-8; Figuren * <br> − − − | 1,5 | |
| A | DE-A-2 232 803 (ORRO et al.) <br> * Seiten 4-9; Figuren 1-4 * <br> − − − | 1,5 | |
| A | FR-A-439 366 (S.A. D'ESCAUT ET MEUSE) <br> − − − | | |
| A | US-A-2 548 603 (HALLSTRAND) <br> − − − − − | | |

**RECHERCHIERTE SACHGEBIETE (Int. Cl.5)**

B 21 B
F 16 H

**Der vorliegende Recherchenbericht wurde für alle Patentansprüche erstellt**

| Recherchenort | Abschlußdatum der Recherche | Prüfer |
|---|---|---|
| Den Haag | 09 April 91 | ROSENBAUM H.F.J. |